# EUROPEAN PATENT APPLICATION

(11) **EP 2 386 206 A1**
(43) Date of publication of application: **16.11.2011**
(21) Application number: 11166271.4
(22) Date of filing: 16.05.2011
(51) Int. Cl.: A21D 13/00, A23L 1/0524, A23L 1/0532, A23L 1/0534, A23L 1/054, A23L 1/0562

(54) **Bakeable and shelf stable filling**

(30) Priority: 16.05.2010 CN 201010187726
(71) Applicant: Kraft Foods Global Brands LLC, Northfield, IL 60093 (US)
(72) Inventor: Zeng, Xin, 215000, Suzhou (CN); Yao, Wei, 215125, Suzhou (CN)
(74) Representative: Setna, Rohan P.

(57) **Abstract**

The present invention relates to a bakeable and shelf stable filling, baked food products comprising said filling, and method of preparing said baked food products, as well as use of said filling in the preparation of baked food products or sweeties. The filling according to the present invention comprises 2 to 20% by weight of edible oil(s) and/or fat(s), has a water content of 10 to 35% by weight, and comprises thermal get(s), ionic gel(s) and whey protein-containing material, wherein said filling comprises a premixture obtainable by a method comprising: mixing whey protein-containing material(s) with edible oil(s) and/or fat(s); adding an amount of water to the resulting mixture and heating to 65 to 95°C for a period of time so as to obtain an emulsified mixture; and lowering the temperature of the emulsified mixture. The filling according to the present invention has good baking stability without the occurrence of "boiling out", and is therefore suitable for baking. Said filling can maintain a high oil retention rate under baking conditions,

## Description

### Technical Field

The present invention relates to a bakeable and shelf stable filling. In particularly, the present invention relates to a bakeable, shelf stable filling having a smooth mouth feel and low sweetness. The present invention also involves baked food products comprising such a filling,

### Background Art

In the baking industry, the filling for baked food products is added with edible oil(s) and/or fat(s) to impart a creamy smooth mouth feel to the baked food products. However, the filling which has high contents of water and oil(s) is prone to "boil out" in the process of baking, which is unacceptable for making finished baked food products. Therefore, high-water-and-oil-content filling is generally not considered as suitable for baking. Current practice with regard to such filling is that crust material is baked followed by adding such high-water-and-oil-content filling to the baked crust material!.

At present, few researches are available on bakeable, shelf stable filling having a creamy smooth mouth feel and low sweetness.

### Summary of the Invention

An object of the present invention is to overcome the limit that high-water-and-oil-content filling having smooth mouth feel is not suitable for baking, thereby providing a bakeable and shelf stable high-water-and-oil-content filling having smooth mouth feel.

Another object of the present invention is to provide a bakeable filling having the flavor of dairy products (such as milk, yogurt and cheese).

Yet another object of the present invention is to provide baked food products comprising the above-said bakeable filling.

Through intensive research, the present inventors have found that use of thermal gel(s) and ionic gel(s) (two categories of hydrophilic gel(s)) in filling having an oil content of from 2 to 20% by weight and a water content of from 10 to 35% by weight may stabilize the structure of the filling in the process of baking. Moreover, use of these two categories of gel(s) helps to maintain low viscosity of filling in the finished baked food products, providing a creamy smooth mouth feel of the filling.

The present inventors have also found that whey protein can be used as an emulsifier in filling to capture oil molecules in the filling, thereby preventing oil leakage during baking or storage. Use of pretreated whey protein in the high-water-and-oil-content filling as described above contributes to a smooth mouth feel and helps the filling maintain a high oil retention rate under baking conditions. The whey protein in combination with ionic get(s) and thermal gel(s) allows the filling having an oil content of up to 20% by weight to maintain a good structural stability under baking conditions without suffering from substantial oil leakage.

The present inventors have further found that the water activity of filling can be controlled such that the risk of microbial contamination in the finished baked food products is reduced, thereby ensuring a storage period of at least six months under ambient temperature and humidity for the finished baked food products produced.

Based on the above findings, the following technical solutions are provided in the present invention:
1. A bakeable and shelf stable filling, said filling comprising 2 to 20%, by weight of edible oil(s) and/or fat(s), having a water content of 10 to 35% by weight, and comprising thermal gel(s), ionic gel(s) and whey protein-containing material, wherein said filling comprises a premixture obtainable by a method comprising- mixing whey protein-containing material(s) with edible oil(s) and/or fat(s); adding an amount of water to the resulting mixture and heating to 65 to 95°C for a period of time so as to obtain an emulsified mixture; and lowering the temperature of the emulsified mixture.
2. The filling according to technical solution 1, wherein the preparation method of the said premixture includes adding an amount of water to the resulting mixture and heating to 65 to 95°C for 5 to 60 minutes.
3. The filling according to any one of the preceding technical solutions, wherein the preparation method of the said premixture includes adding water in a ratio of oil(s) to water of from 3:1 to 1:3 by weight.
4. The filling according to any one of the preceding technical solutions, wherein said whey protein-containing material is used in an amount such that the content of whey protein in the filling is 0.5 to 2.5% by weight.
5. The filling according to any one of the preceding technical solutions, wherein said thermal gel(s) are those having a gelling temperature in the range of 38 to 55°C.
6. The filling according to any one of the preceding technical solutions, wherein said thermal gel is cellulose ether.
7. The filling according to any one of the preceding technical solutions, wherein said cellulose ether is selected from methyl cellulose, ethyl cellulose, hydroxypropylmethyl cellulose, hydroxyethylmethyl cellulose, and combinations thereof.
8. The filling according to any one of the preceding technical solutions, wherein said ionic gel(s) are selected from inicrocrystalline cellulose, alginate, sodium carboxymethyl cellulose, xanthan, carrageenan, and combinations thereof
9. The filling according to any one of the preceding technical solutions, said filling having a water activity of 0.5 to 0.85.
10. The filling according to any one of the preceding technical solutions, said filling having a water activity of 0.66 to 0.73.
11. The filling according to any one of the preceding technical solutions, said filling having a Brix of 65 to 80 as based on refractive index at 20°C.
12. The filling according to any one of the preceding technical solutions, said filling having a Brix of 74 to 78 as based on refractive index at 20°C.
13. The filling according to any one of the preceding technical solutions, wherein said edible oil(s) and/or fat(s) have a melting point of 12 to 41°C.
14. The filling according to any one of the preceding technical solutions, said filling further comprising one or more dairy products.
15. The filling according to the preceding technical solution 14, wherein said dairy products are selected from milk powder, yogurt powder and cheese powder.
16. Baked food products, said products comprising the filling according to any one of technical solutions 1 to 15.
17. The baked food products according to technical solution 16, said products being selected from bread, cracker, cake, pastry and biscuit.
18. A method for preparing the baked food products according to technical solution 16 6 or 17, said method comprising adding the filling according to any one of technical solutions 1 to 15 to crust material hollowed by a baking step.
19. Use of the filling according to any one of technical solutions 1 to 15 in the preparation of baked food products or sweeties.

### Detailed Description of the Invention

According to the present invention, 2 to 20% by weight of edible oil(s) and/or fat(s) are added into the filling for baked food products or sweeties to impart the filling a creamy smooth mouth feel, Common oil(s) and fat(s) for use in food can be used in the filling according to the present invention. Non-limiting examples include vegetable oils, animal oils and fats, hydrogenated vegetable oils, and mixture thereof. Said vegetable oils include for example peanut oil, soybean oil corn oil, palm oil, rapeseed oil, sunflower seed oil, olive oil, sesame oil and the like, and mixture thereof. Said animal oils and fats include for example beef fat, pig fat (lard), sheep fat, butter and the like, and mixture thereof. Different edible oils and/or fats will result in the finished products having different mouth feel and melting properties in the mouth. Edible oil(s) and/or fat(s) are preferably added in the filling in an amount of 5 to 15% by weight or 10 to 15%, by weight. The melting point of the edible oil(s) and/or fat(s) may have an influence on the fluidity of the filling, According to the present invention, edible oil(s) and/or fat(s) having a melting point in the range of 12 to 41°C are preferred.

The filling according to the present invention has a water content of from 10 to 35% by weight.

In order that the filling according to the present invention is bakeable, that is, remains structurally stable in the process of baking, thermal gel(s) and ionic gel(s) are used in the filling. The gelling temperature of thermal gel(s) is suitably selected based on the particular application of the fining. The gelling temperature of thermal gel(s) is typically about 38 to 55°C, preferably about 55°C. With such a temperature, the filling will gel in the early stage of baking, thus being stabilized. As used herein, "gelling temperature" refers to the initial temperature at which a gel begins to form.

The preferred examples of thermal gels include cellulose ether. Cellulose ether is prepared from cellulose and chlorinated methane under basic conditions, optionally in the presence of an epoxide. Cellulose ether is characterized by the tendency to form a gel upon heating the aqueous solution thereof. Preferred examples of cellulose ether include methyl cellulose, ethyl cellulose, hydroxypropylmethyl cellulose, hydroxyethylmethyl cellulose, and mixture thereof with methyl cellulose being more preferred. Ionic gel(s) are ionic hydrocolloid;, such as microcrystal line cellulose, alginate, sodium carboxymethyl cellulose, xanthan, carrageenan and the like, with microcrystalline cellulose being preferred. The filling according to the present invention can remain stable when baked at about 185°C for about 15 minutes, or baked at about 200°C for about 10 minutes. Methyl cellulose, which is a representative example of thermal gel(s), also helps to emulsify the edible oil(s) and/or fat(s) in the filling.

Whey product is obtained from concentration of whey, a by-product in the production of cheese. Its main components include β-lactoglobulin, α-lactoglobulin, proteinase-peptone, whey albumin and immunoglobulin. According to the present invention, whey protein-containing material can be used as emulsifier in the filling to capture oil molecules in it, thereby preventing oil leakage during baking or storage. According to the present invention, use of specifically pretreated whey protein-containing materials in the high-water-and-oil-content filling not only contributes to a smooth mouth feel, but also helps the filling maintain a high oil retention rate under baking conditions. The filling according to the present invention can maintain a good structural stability under baking conditions without suffering from substantial oil leakage even it has an oil content of up to 20% by weight.

In the embodiments of the present invention, said filling comprises a premixture obtainable by a method comprising:
(1) mixing whey protein-containing material(s) with edible oil(s) and/or fat(s);
(2) adding an amount of water to the resulting mixture and heating to 65 to 95°C for a period of time so as to obtain an emulsified mixture, and
(3) lowering the temperature of the emulsified mixture.

In step (1) of the above method, whey protein-containing material can be thoroughly mixed with edible oil(s) and/or fat(s) using any known techniques. The mixing generally can be conducted at ambient temperature. In a preferred embodiment, the mixing can be conducted at 50 to 60 °C.

When edible fat(s) which are solid at ambient temperature are used, it is preferred that the edible fat(s) are melted before mixing with whey protein-containing material, such as by heating the edible fat(s) at 40 to 50°C, Alternatively, the edible fat(s) are preferably micronized.

In a preferred embodiment of step (1), whey protein is evenly dispersed into edible oil(s) and/or fat(s) by high-speed agitation. Non-limiting examples of ways and equipments of mixing useful in this step include dispersion using high-speed disperser, dispersion using emulsion head, etc. The agitation speed is for example but not limited to from 1,440 to 2,600 rpm, and the agitation time is for example but not limited to about 5 to 10 minutes. In preferred embodiments, for example, the agitation is performed at a speed of about 1,440 rpm for a period of about 10 minutes.

It is believed that high-speed agitation may enhance the adsorption/dispersion of whey protein at the interface of oil droplets or water droplets.

The whey protein-containing material(s) useful in the filling according to the present invention can be those commercially available, tioti-limiting examples of which include whey protein concentrate(s) having a whey protein content of 60% by weight or above.

Preferably, the whey protein-containing material is used in an amount such that the content of whey protein in the filling is 0.5 to 2.5% by weight. More preferably, the whey protein-containing material is used in an amount such that the content of whey protein in the filling is 1 to 1.5% by weight.

In step (2), water is preferably added in a ratio of oil to water of 3:1 to 1:3 by weight, more preferably added in a ratio of oil to water or 2:1 by weight. Water can be added into the mixture before heating, or can be added when the mixture is heated to the desired temperature. Preferably, heating and temperature-keeping are performed under stirring.

The mixture can be heated to 65 to 95°C, preferably 70 to 90°C, more preferably 85°C, by using conventional methods. The mixture is kept at said temperature for a period of time to achieve emulsification. In preferred embodiments, the mixture is heated to 65 to 95°C, preferably 70 to 90°C, more preferably 85°C, and then kept at said temperature for a period of time until a creamy mass is obtained that is smooth and uniform in texture and free of oil leakage.

As used herein, "smooth and uniform in texture and free of oil leakage" means that no particulate matters are present as felt by hand and tasted by mouth, and that no oil floating on water surface is observed when the creamy mass is put into the water for 5 minutes.

The time for temperature-keeping varies depending on the temperature. Generally, the higher the temperature, the shorter the time for temperature-keeping. Typically, the time for temperature-keeping is not longer than I hour and preferably not shorter than 5 minutes. Preferably, the time for temperature-keeping is 5 to 30 minutes, more preferably 5 to 15 minutes, and more preferably 10 to 25minutes.

It is believed that in step (2) whey protein is heated to denaturation such that the molecules of the protein are structurally unfolded and become oriented and rearranged at the oil-water interface.

In step (3), the lowering of the temperature of the emulsified mixture obtained in step (2) is by conventional methods. For example, the emulsified mixture can be naturally cooled to room temperature.

It is believed that lowering the temperature may allow gel network structure to form and solidify, thus enabling absorption of large amounts of oils and fats and water.

In the case that the filling according to the present invention further contains one or more dairy products, it is preferred that, in step (1)., powder of the dairy products is mixed together with edible oil(s) and/or fat(s) and whey protein-containing material.

The water activity (Aw) of the filling according to the present invention is controlled at 0.5-0.85, preferably 0.5-0.73, and more preferably 0.66-0.73. At the Aw according to the present invention, a storage period of the filling of at least six months under ambient temperature and humidity is ensured. Depending on the soluble solid components of the filling that are specifically used, the Aw of the filling can be controlled by adjusting the amount of glycerine used.

The stability of the filling according to the present invention is advantageously maintained by controlling the Brix of the filling. In order to keep a particular Aw so that a certain degree of stability is ensured, the Brix of the filling is desirably not too low. The Brix of the filling according to the present invention (as based on refractive index at 20°C) is suitably Brix 65 to 80, more suitably Brix 74 to 80, and even more suitably Brix 74 to 78. Various conventional sweeteners can be used in the filling according to the present invention. Non-limiting examples include various types of syrups (such as corn syrup, glucose syrup etc), sugar alcohols (such as xylitol, maltitol, sorbitol etc), sucrose, fructose, or mixture thereof. Low-sweetness sweeteners can be selected for use according to the needs of customers, such as glucose syrup, sorbitol etc.

The filling according to the present invention can be of a variety of flavors. In one preferred embodiment of the present invention, the filling is one having the flavor of dairy products by virtue of comprising one or more dairy products. Preferred and non-limiting examples of the dairy products include milk powder, yogurt powder and cheese powder.

A variety of conventional food additives can also be used in the filling according to the present invention, such as flavoring agent, emulsifying agent and preservative etc.

The filling according to the present invention can be used to prepare baked food products or sweeties. Non-iimiting examples of baked food products comprising the filling according to the present invention include bread, cracker, cake (including mooncake), pastry, biscuits, among others.

The filling according to the present invention can be subjected to baking processing after being added into crust material. Therefore according to the present invention, a method for preparing baked food products comprising the filling according to the present invention is provided which comprises adding the filling to crust material followed by a baking step.

### Beneficial effects

The filling according to the present invention has good baking stability as demonstrated by remaining stable when baked at a temperature of up to about 185°C for about 15 5 minutes or at a temperature of up to about 200°C for about 10 minutes without the occurrence of "boiling out", and is therefore suitable for baking.

The filling maintains a high oil retention rate under baking conditions. The filling can still maintain a good structural stability under baking conditions without suffering from substantial oil leakage even it has an oil content of up to 20% by weight.

The filling shows a good storage stability, having a storage period of at least six months under ambient temperature and humidity. The finished baked products comprising the baked filling will have a storage period of at least six months.

The filling has a smooth mouth feel. It can also have a variety of flavors, including the flavor of dairy products which include yogurt.

### Examples

The following examples are provided to further illustrate and describe the preferred embodiments of the present invention and are not to be construed as limiting in any way. A mixer with heating, Thermomixer (model no. TM31-4C from Vorwerk Semco S.A.S.), is used in the following examples, which can mix at different speeds and is capable of heating and temperature control.

The ingredients of formulations used in the following examples are all commercially available, in which: non-hydrogenated palm oil is purchased from Kerry Oils & Grains Co., Ltd; whole fat milk powder is purchased from Shuangwa Mink Products Co., Ltd; skimmed yogurt powder and whey protein concentrate 80% (WPC 80%) are all purchased from Pacific Dairy Ingredients (Shanghai) Ltd; microcrystalline cellulose is purchased from FMC (Shanghai) Commercial Enterprise; methyl cellulose is purchased from Ximong Food Co., Ltd; and Qieda cheese powder is purchased from Kraft Food Ingredients Corp.

In the following examples, some methods of determination are used, as listed below. Determination of baking endurance of filling:
1. Put a stainless steel or teflon ring object used in the detection (bottom inner diameter 4.29 cm x top inner diameter 3.81 cm x height 1.9 cm) on a baking pan paper which is spread on a baking pan, with the bottom of the ring object facing downward.
2. Fill the sample of the filling into the ring object until full.
3. Place the baking pan with the filling in the ring object into a baking oven whose temperature is set at 200°C and the baking time is set at 10 minutes.
4. After completing baking, remove the baking pan from the baking oven and allow it to cool to room temperature. Measure the widest and the narrowest diameters of the filling after baking. When the widest diameter exceeds 13 cm, "broiling out" of the filling can be observed.

Determination method of water content: GB/T 5009.3 - 2003, Determination of water content in foodstuffs

Determination method of oil and fat content: GB/T 5009.6 - 2003, Determination of oil and fat content in foodstuffs

Determination of water activity: GB/T 23490, Determination of water activity in foodstuffs

Determination method of Brix: GB/T 10786, Inspection method of canned food

### Example 1

| Ingredients | % w/w |
|---|---|
| corn syrup | 42 |
| sucrose | 5 |
| glycerine | 8 |
| non-hydrogenated palm oil | 15 |
| whole fat milk powder | 20 |
| whey protein concentrate80% | 1.5 |
| microcrystalline cellulose | 0.8 |
| methyl cellulose | 0.5 |
| citric acid | 0.5 |
| edible milk essence | 0.5 |
| water | 6.2 |
| | |
| total | 100 |

Preparation procedure:
1. Preparation of stock materials:
   stock materials (1):
      Dry-mix methyl cellulose and sucrose at the indicated amount in the above table. Then add the mixture slowly into water. with the amount of water being 10-fold of the weight of methyl cellulose, and stir at moderate speed until the resulting gel swells sufficiently. Let the gel stand for more than 20 minutes for later use.
      stock materials (2):
   Heat non-hydrogenated palm oil, at the indicated amount in the above table, to 40 to 50°C until melted. Then add whole fat milk powder and whey protein concentrate, and stir until evenly dispersed (1000 rpm. 15min). Add water, with the amount of water being 1-fold of the weight of nem-hydrogenated palm oil, and heat to 85°C for 10 minutes, then lower the temperature to 60°C for later use.
2. Preparation of baking-endurant filling.
   Add microcrystalline cellulose at the indicated amount in the above table to the mixture of corn syrup, glycerine and water (the amount of water being 6-Md of the weight of microcrystalline cellulose), and stir at high speed (3000rpm, 10min) until microcrystalline cellulose is completely dispersed;
   Add stock materials (1), and concentrate the resulting mixture to Brix 81 by heating;
   Add stock materials (2), mix well, and concentrate the resulting mixture to Brix 76-77,
   Add citric acid and edible milk essence at the indicated amount in the above table to obtain the final formulation. Concentrate the formulation to Brix 75-76, with a pH of about 4.2.

Through analysis of the baking endurance of the filling obtained as above, the narrowest diameter of the filling was found to be 10.5 cm, and the widest diameter was 11.0 cm. No "boiling out" was observed, and no substantial oil leakage was visually inspected.

The water activity was determined to be 0.693.

The water content was 22.3%.

The filling had a smooth mouth feel, without the feeling of sand and the obvious feeling of powder.

### Example 2

| Ingredients | % w/w |
|---|---|
| corn syrup | 40 |
| sucrose | 5 |
| glycerine | 8 |
| non-hydrogenated palm oil | 20 |
| whole fat milk powder | 18 |
| whey protein concenlrate80% | 2.5 |
| microcrystalline cellulose | 0,8 |
| methyl cellulose | 0.5 |
| citric acid | 0.5 |
| edible milk essence | 0.5 |
| water | 4.2 |
| total | 100 |

Preparation procedure: Same as Example 1, except that stock materials (2) is prepared as Mows:
Heat non-hydrogenated palm oil, at the indicated amount in the above table, to 40 to 50°C until melted. Then add whole fat milk powder and whey protein concentrate, and stir until evenly dispersed (1000 rpm, 15min). Add water, with the amount of water being half of the weight of non-hydrogenated palm oil, and heat to 70°C for 10 minutes, then lower the temperature to 60°C for later use.

Through analysis of the baking endurance of the filling obtained, the narrowest diameter of the filling was found to be 10.0 cm, and the widest diameter was 11.5 cm. No "boiling out" was observed, and no substantial oil leakage was visually inspected.

The water activity was determined to be 0.662.

The water content was 18.0%.

The filling had a smooth mouth feel, without the feeling of sand and the obvious feeling of powder.

### Example 3

| Ingredients | % w/w |
|---|---|
| corn syrup | 50 |
| sucrose | 5 |
| glycerine | 8 |
| non-hydrogenated palm oil | 5 |
| whole fat milk powder | 20 |
| whey protein concentrate80% | 0.6 |
| microcrystalline cellulose | 0.8 |
| methyl cellulose | 0.5 |
| citric acid | 0.5 |
| edible milk essence | 0.5 |
| water | 9.1 |
| | |
| total | 100 |

### Preparation procedure: Same as Example 1

Through analysis of the baking endurance of the filling obtained, the narrowest diameter of the filling was found to be 10.0 cm, and the widest diameter was 11.5 cm. No "boiling out" was observed, and no substantial oil leakage was visually inspected.

The water activity was determined to be 0.710.

The water content was 22.0%.

The filling had a smooth mouth feel, without the feeling of sand and the obvious feeling of powder.

### Example 4

| Ingredients | % w/w |
|---|---|
| corn syrup | 45 |
| sucrose | 5 |
| glycerine | 8 |
| non-hydrogenated palm oil | 10 |
| whole fat milk powder | 12 |
| whey protein concentrate80% | 1 |
| microcrystalline cellulose | 1.0 |
| methyl cellulose | 0.8 |
| citric acid | 0.5 |
| edible milk essence | 0.5 |
| water | 16.2 |
| | |
| total | 100 |

Preparation procedure:
Same as Example 1

### 2. Preparation of baking-endurant filling:

Add microcrystalline cellulose at the indicated amount in the above table to the mixture of corn syrup, glycerine and water (the amount of water being 6-fold of the weight of microcrystalline cellulose), and stir at high speed (3000rpm, 10min) until microcrystalline cellulose is completely dispersed;
Add stock materials (1), and concentrate the resulting mixture to Brix 75-76 by heating;
Add stock materials (2), mix well, and concentrate the resulting mixture to Brix 71-72;
Add citric acid and edible milk essence at the indicated amount in the above table to obtain the final formulation. Concentrate the formulation to Brix 71-72, with a pH of about 4.2.

Through analysis of the baking endurance of the filling obtained, the narrowest diameter of the filling was found to be 11.0 cm, and the widest diameter was 11.5 cm, No "boiling out" was observed, and no substantial oil leakage was visually inspected.

The water activity was determined to be about 0.84.

The water content was 30.2%.

The filling had a smooth mouth feel, without the feeling of sand and the obvious feeling of powder.

### Example 5

| Ingredients | % w/w |
|---|---|
| corn syrup | 42 |
| sucrose | 5 |
| glycerine | 8 |
| non-hydrogenated palm oil | 15 |
| whole fat milk powder | 10 |
| skimmed yogurt powder | 10 |
| whey protein Concentrate80% | 1.5 |
| microcrystalline cellulose | 0.8 |
| hydroxypropylmethyl cellulose | 0.5 |
| citric acid | 0.5 |
| yogurt essence | 0.5 |
| water | 6.2 |
| | |
| total | 100 |

Preparation procedure: Same as Example 1, except that whole fat milk powder and skimmed yogurt powder are used to replace whole fat milk powder, and hydroxypropylmethyl cellulose is used to replace methyl cellulose.

Through analysis of the baking endurance of the filling obtained, the narrowest diameter of the filling was found to be 10.5 cm, and the widest diameter was 11,5 cm. No "boning out" was observed, and no substantial oil leakage was visually inspected.

The water activity was determined to be 0.680.

The water content was 23.0%.

The filling had a smooth mouth feel, without the feeling of sand and the obvious feeling of powder.

### Example 6

| Ingredients | % w/w |
|---|---|
| corn syrup | 45 |
| sucrose | 5 |
| glycerine | 8 |
| non-hydrogenated palm oil | 10 |
| whole fat milk powder | 7 |
| Qieda cheese powder | 5 |
| whey protein concentrate80% | 1 |
| microcrystalline cellulose | 1.0 |
| hydroxypropylmethyl cellulose | 0.8 |
| citric acid | 0.5 |
| Qieda cheese essence | 0.5 |
| water | 16,2 |
| | |
| total | 100 |

Preparation procedure: Same as Example 4, except that whole fat milk powder and Qieda cheese powder are used to replace whole fat milk powder, hydroxypropylmethyl cellulose is used to replace methyl cellulose, and Qieda cheese essence is used to replace edible milk essence.

Through analysis of the baking endurance of the filling obtained, the narrowest diameter of the filling was found to be 10.0 cm, and the widest diameter was H.5 cm. No "boiling out" was observed, and no substantial oil leakage was visually inspected.

The water activity was determined to be about 0.82,

The water content was 29.1%.

The filling had a smooth mouth feel, without the feeling of sand and the feeling of powder.

### Comparative example 1

| Ingredients | % w/w |
|---|---|
| corn syrup | 42 |
| sucrose | 5 |
| glycerine | 8 |
| non-hydrogenated palm oil | 15 |
| whole fat milk powder | 20 |
| whey protein concentrate80% | 1.5 |
| microcrystalline cellulose | 0.8 |
| methyl cellulose | 0.5 |
| citric acid | 0.5 |
| edible milk essence | 0.5 |
| water | 6.2 |
| | |
| total | 100 |

Preparation procedure:
1. Preparation of stock materials:
   stock materials (1):
      Dry-mix methyl cellulose and sucrose at the indicated amount in the above table. Then add the mixture slowly into water, with the amount of water being 10-fold of the weight of methyl cellulose, and stir at moderate speed until the resulting gel swells sufficiently. Let the gel stand for more than 20 minutes for later use.
   stock materials (2'):
      Heat the non-hydrogenated palm oil, at the indicated amount in the above table, to 40 to 50°C until melted. Then add whole fat milk powder and whey protein concentrate, and stir until evenly dispersed (1000 rpm, 15min);
2. Preparation of baking-endurant filling:
   Add microcrystalline cellulose at the indicated amount in the above table to the mixture of corn syrup, glycerine and water (the amount of water being 5-fold of the weight of microcrystalline cellulose), and stir at high speed (3000rpm, 10min) until microcrystalline cellulose is completely dispersed,
   Add stock materials (1), and concentrate the resulting mixture to Brix 81 by heating;
   Add stock materials (2'), mix well, and concentrate the resulting mixture to Brix 76-77;
   Add citric acid and edible milk essence at the indicated amount in the above table to obtain the final formulation. Concentrate the formulation to Brix 75-76, with a pH of about 4.2.

Through analysis of the baking endurance of the filling obtained as above, the narrowest diameter of the filling was found to be 10.5 cm, and the widest diameter was 11.5 cm, No "boiling out" was observed, but oil leakage was observed, with the narrowest diameter of oil circle formed being greater than 16 cm.

The water activity was determined to be 0.675.

The water content was 13.0%.

The filling had a smooth mouth feel, without the feeling of sand and the obvious feeling of powder.

### Comparative example 2

| Ingredients | % w/w |
|---|---|
| corn syrup | 42 |
| sucrose | 5 |
| glycerine | 8 |
| non-hydrogenated palm oil | 15 |
| whole fat milk powder | 21.5 |
| whey protein concentrate80% | 0 |
| microcrystalline cellulose | 0.8 |
| methyl cellulose | 0.5 |
| citric acid | 0.5 |
| edible milk essence | 0.5 |
| water | 6.2 |
| | |
| total | 100 |

Preparation procedure:
1. Preparation of stock materials:
   stock materials (1):
      Dry-mix methyl cellulose and sucrose at the indicated amount in the above table. Then add the mixture slowly into water, with the amount of water being 10-fold of the weight of methyl cellulose, and stir at moderate speed until the resulting gel swells sufficiently. Let the gel stand for more than 20 minutes for later use,
   stock materials (2°):
      Heat non-hydrogenated palm oil, at the indicated amount in the above table, to 40 to 50°C until melted. Then add whole fat milk powder and stir until evenly dispersed (1500 rpm, 10min). Add water, with the amount of water being 1-fold of the weight of non-hydrogenated palm oil, and heat to 85°C for 10 minutes, then lower the temperature to 60°C for later use.
2. Preparation of baking-endurant filling:
   Add microcrystalline cellulose at the indicated amount in the above table to the mixture of corn syrup, glycerine and water (the amount of water being 5-fold of the weight of microcrystalline cellulose), and stir at high speed (3000rpm, 10min) until microcrystalline cellulose is completely dispersed;
   Add stock materials (1), and concentrate the resulting mixture to Brix 81 by heating;
   Add stock materials (2'), mix well, and concentrate the resulting mixture to Brix 76-77;
   Add citric acid and edible milk essence at the indicated amount in the above table to obtain the final formulation. Concentrate the formulation to Brix 75-76, with a pH of about 4.2.

Through analysis of the baking endurance of the filling obtained as above, the narrowest diameter of the filling was found to be 10.5 cm, and the widest diameter was 11.5 cm. No "boiling out" was observed, but oil leakage was observed, with the narrowest diameter of oil circle formed being 14 cm, and the widest diameter being 16 cm.

The water activity was determined to be 0.680.

The water content was 24.0%.

The filling had a smooth mouth feel, without the feeling of sand and the obvious feeling of powder.

### Comparative example 3

| Ingredients | % w/w |
|---|---|
| corn syrup | 42 |
| sucrose | 5 |
| glycerine | 8 |
| non-hydrogenated palm oil | 15 |
| whole fat milk powder | 20.0 |
| whey protein concentrate80% | 1.5 |
| microcrystalline cellulose | 1.3 |
| methyl cellulose | 0.0 |
| citric acid | 0.5 |
| edible milk essence | 0.5 |
| water | 6.2 |
| | |
| total | 100 |

Preparation procedure:
1. Preparation of stock materials:
   stock materials (1):
      Heat non-hydrogenated palm oil, at the indicated amount in the above table, to 40 to 50°C until melted. Then add whole fat milk powder and whey protein concentrate 80%, and stir until evenly dispersed (1500 rpm, 10min). Add water, with the amount of water being 1-fold of the weight of non-hydrogenated palm oil, and heat to 85°C for 10 minutes, then lower the temperature to 60°C for later use.
2. Preparation of baking-endurant filling:
   Add microcrystalline cellulose at the indicated amount in the above table to the mixture of corn syrup, glycerine and water (the amount of water being 5-fold of the weight of microcrystalline cellulose), and stir at high speed (3000rpm, 5min) until microcrystalline cellulose is completely dispersed;
   Add sucrose and concentrate the mixture to Brix 81 by heating;
   Add stock materials (1), mix well, and concentrate the resulting mixture to Brix 76-77;
   Add citric acid and edible milk essence at the indicated amount in the above table to obtain the final formulation. Concentrate the formulation to Brix 75-76, with a pH of about 4.2.

Through analysis of the baking endurance of the filling obtained as above, the narrowest diameter of the filling was found to be 14.5 cm, and the widest diameter was 16,0 cm. "Boiling out'' of the filling was observed, and oil leakage was observed, with the narrowest diameter of oil circle formed being greater than 16 cm. The water activity was determined to be 0.690.

The water content was 24.0%.

The filling had a relatively smooth mouth feel, without the obvious feeling of sand and powder.

### Comparative 4

| Ingredients | % w/w |
|---|---|
| corn syrup | 42 |
| sucrose | 5 |
| glycerine | 8 |
| non-hydrogenated palm oil | 15 |
| whole fat milk powder | 20.0 |
| whey protein concentrate80% | 1.5 |
| microcrystalline cellulose | 0.0 |
| methyl cellulose | 1.2 |
| citric acid | 0.5 |
| edible milk essence | 0.5 |
| water | 6.3 |
| total | 100 |

Preparation procedure:
1. Preparation of stock materials:
   stock materials (1):
      Dry-mix methyl cellulose and sucrose at the indicated amount in the above table, Then add the mixture slowly into water, with the amount of water being 10-fold of the weight of methyl cellulose, and stir at moderate speed until the resulting gel swells sufficiently. Let the gel stand for more than 20 minutes for later use,
   stock materials (2'):
      Heat non-hydrogenated palm oil, at the indicated amount in the above table, to 40 to 50°C until melted. Then add whole fat milk powder and whey protein concentrate 80%, and stir until evenly dispersed (1500 rpm, 10min). Add water, with the amount of water being 1-fold of the weight of non-hydrogenated palm oil, and heat to 85°C for 10 minutes, then lower the temperature to 60°C for later use.
2. Preparation of baking-endurant filling:
   Mix well corn syrup, glycerine and water at the indicated amount in the above table by stirring;
   Add stock materials (1), and concentrate the resulting mixture to Brix 81 by heating;
   Add stock materials (2'), mix well, and concentrate the resulting mixture to Brix 76-77;
   Add acid and essence at the indicated amounts in the above table to obtain the final formulation, then concentrate the formulation to Brix 75-76, with a pH of about 4.2.

Through analysis of the baking endurance of the filling obtained as above, the narrowest diameter of the filling was found to be 15.0 cm, and the widest diameter was 15.5 cm. "Boiling out" of the filling was observed, and oil leakage was observed, with the narrowest diameter of oil circle formed being greater than 16 cm.

The water activity was determined to be 0.70.

The water content was 24.0%.

The filling had a relatively smooth mouth feel, without the obvious feeling of sand and powder.

## Claims

1. A bakeable and shelf stable filling, said filling comprising 2 to 20% by weight of edible oil(s) and/or fat(s), having a water content of 10 to 35% by weight, and comprising thermal gel(s), ionic gel(s) and whey protein-containing material, wherein said filling comprises a premixture obtainable by a method comprising: mixing whey protein-containing material(s) with edible oil(s) and/or fat(s); adding an amount of water to the resulting mixture and heating to 65 to 95°C for a period of time so as to obtain an emulsified mixture; and lowering the temperature of the emulsified mixture.

2. The filling according to claim 1, wherein the preparation method of the said premixture includes adding an amount of water to the resulting mixture and heating to 65 to 95°C for 5 to 60 minutes and/or wherein the preparation method of the said premixture includes adding water in a ratio of oil(s) to water of from 3:1 to 1:3 by weight.

3. The filling according to claim 1 or claim 2, wherein said whey protein-containing material is used in an amount such that the content of whey protein in the filling is 0.5 to 2.5% by weight.

4. The filling according to any preceding claim, wherein said thermal gel(s) are those having a gelling temperature in the range of 38 to 55°C.

5. The filling according to any preceding claim, wherein said thermal gel is cellulose ether, preferably wherein said cellulose ether is selected from methyl cellulose, ethyl cellulose, hydroxypropylmethyl cellulose, hydroxyethylmethyl cellulose, and combinations thereof.

6. The filling according to any preceding claim, wherein said ionic gel(s) are selected from microcrystalline cellulose, alginate, sodium carboxymethyl cellulose, xanthan, carrageenan, and combinations thereof.

7. The filling according to any of claims 1 to 6, said filling having a water activity of 0.5 to 0.85, preferably having a water activity of 0.66 to 0.73.

8. The filling according to any of claims 1 to 7, said filling having a Brix of 65 to 80 as based on refractive index at 20°C, preferably having a Brix of 74 to 78 as based on refractive index at 20°C.

9. The filling according to any of claims 1 to 8, wherein said edible oil(s) and/or fat(s) have a melting point of 12 to 41 °C.

10. The filling according to any of claims 1 to 9, said filling further comprising one or more dairy products, preferably wherein said dairy products are selected from milk powder, yogurt powder and cheese powder.

11. Baked food products, said products comprising the filling according to any of claims 1 to 10.

12. The baked food products according to claim 11, said products being selected from bread, cracker, cake, pastry and biscuit.

13. A method for preparing the baked food products according to claim 11 or claim 12, said method comprising adding the filling according to any of claims 1 to 10 to crust material followed by a baking step.

14. Use of the filling according to any of claims 1 to 10 in the preparation of baked food products or sweeties.
